# EUROPEAN PATENT APPLICATION

(11) **EP 4 725 815 A1**
(43) Date of publication of application: **15.04.2026**
(21) Application number: 24206197.6
(22) Date of filing: 11.10.2024
(51) Int. Cl.: B62J 15/04, B62J 50/26

(54) **DEVICE, A FIRST MAIN DEVICE COMPONENT AND A SECOND MAIN DEVICE COMPONENT FOR PROVIDING PROTECTIVE COVERING IN WET CONDITIONS**

(71) Applicant: Tr33house ApS, 4780 Stege (DK)
(72) Inventor: Steffensen, Anders Lukas Heinisch, 4780 Stege (DK)
(74) Representative: Chas. Hude A/S

(57) **Abstract**

Disclosed is a device for providing protective covering in wet conditions when mounted on a motorcycle. The device comprises a first main device component (4) and a second main device component (6). The first main device component and the second main device component are configured for being assembled to engage with each other such the second main device component is configured for being retractable with respect to the first main device component, and such that second main device component is further configured for being extendable with respect to the first main device component. The device is configured for comprising a passive state and a deployed state. The device is configured for being mountable on a back face of a rear license plate on the motorcycle. The device is configured for being at least partly concealable in the passive state when mounted on the back face of the license plate.

## Description

### FIELD

The present disclosure relates a device, a first main device component and a second main device component for providing protective covering in wet conditions when mounted on a motorcycle.

### BACKGROUND

Some motorcycle riders, typically those riding the types of motorcycles referred to as Cafe Racers, Racing motorcycles or Street fighters, are reluctant to place a device for providing protective covering in wet conditions on their motorcycle for various reasons. These reasons are often related to aesthetic preference. The device is typically referred to as a mud guard, a splash guard or a fender. However, because wet conditions, such as rain and/or snow can lead to road debris, water or mud splashing up onto the rider and can further lead to decreased visibility for all road users, having a device for providing protective covering in wet conditions is strongly advised due to safety and practical reasons. Thus, there is a need for providing a device for providing protective covering in wet conditions on a motorcycle that is functional in wet conditions but at the same time does not compromise the rider's aesthetic preference in dry conditions.

FR 2748713 A1 shows a retractable mud flap adaptable and partly concealable in the rear mudguard of motorcycles, allowing, by occasional lengthening of the latter, to avoid splashing and the attenuation of the brightness of the vehicle's signal lights in rainy weather without compromising the aesthetics in dry weather.

However, there is a need for an improved device.

### SUMMARY

In accordance with the present disclosure, the above-mentioned and other objects are obtained by the disclosed device or the disclosed first main device component in co-operation with the second main device component.

Disclosed is a device for providing protective covering in wet conditions when mounted on a motorcycle. The device comprises a first main device component and a second main device component. The first main device component and the second main device component are configured for being assembled to engage with each other. The first main device component and the second main device component are configured for being assembled to engage with each other such the second main device component is configured for being retractable with respect to the first main device component. The first main device component and the second main device component are configured for being assembled to engage with each other such that second main device component is further configured for being extendable with respect to the first main device component. The device is configured for comprising a passive state when the second main device component is fully retracted with respect the first main device component. The device is configured for comprising a deployed state when the second main device component is fully extended with respect to the first main device component. The device is configured for being mountable on a back face of a rear license plate on the motorcycle. The device is configured for being at least partly concealable in the passive state when mounted on the back face of the license plate.

It is an advantage that the device comprises both the passive and the deployed state. Specifically, it is an advantage that the device, in the deployed state, is providing protective covering in wet conditions, while at the same time being at least partly concealable in the passive state. Thus, it is an advantage that the device provides protection from road debris, water or mud splashing up onto the rider and further provides a reduction in the water mist that wet conditions can cause that may led to decreased visibility for all road users, while the device at the same time does not compromise the rider's aesthetic preference in dry conditions. Additionally, even if the device is not completely concealed by the licence plate in the passive state, the user's preference for aesthetic would then only be partly comprised, while the device still provides the functionality as disclosed. Thus, even in this case, the device would still be an improved device compared to the prior art.

It is an advantage that the device is configured for being mountable on the back face of the rear license plate on the motorcycle. Thus, compared to the prior art, there is no need for the motorcycle to already have a rear mud guard for this device to be mounted on motorcycle. Furthermore, it is an advantage that this device is configured for being mounted on the licence plate of the motorcycle, because licences plates for motorcycles typically do not show a high degree of variation in size, even across different countries, as compared to e.g. the high degree of variation shown for other parts of a motorcycle across different types of motorcycles. For example, in the UK, licence plates for motorcycles may typically have approximately a width of 230 mm, and a height of 178 mm, while in Germany, licence plates for motorcycles may typically have approximately a width of 220 mm, and a height of 200 mm. Thus, it is an advantage that the device as claimed may be suitable for being mounted on various different types of motorcycles.

Furthermore, it is an advantage that the device, because it is configured for being mountable on the back face of the rear license plate on the motorcycle, also provides reinforcement to the licence plate. In some countries, the official license plate is made from brittle material and may easily chip or crack. Thus, by mounting the device on the motorcycle, specifically on the back side of the rear license plate on the motorcycle, the device may provide the reinforcement effect.

The device may be made from a material that is both flexible and durable at the same time. Such a material may be some type of synthetic material or it may be a metal. Preferrable, the material is a thermoplastic that is suitable for 3D printing because this provides an easy and cheap way of manufacturing. Additionally, it is preferrable that the material is UV resistant, at least to some degree. There are many suitable thermoplastic available to the skilled person. In a preferred embodiment, the device is made from Polyethylene Terephthalate Glycol, also known as PETG. The considerations for the material of the device equally applies to the first main device component and the second main device component. However, it is envisioned that the first main device component and the same main device component may be made from different materials, although in a preferred embodiment, they are made from a same material.

The device is a device suitable for providing protective covering in wet conditions when mounted on a motorcycle. The device comprises the first main device component and the second main device component. The first main device component and the second main device component are configured for being assembled to engage with each other. The first main device component and the second main device component are two separate components that may be assembled to collectively form the device. The user may manually assemble the device by "clicking" the second main device component into the first device component.

The first main device component and the second main device component are configured for being assembled to engage with each other such the second main device component is configured for being retractable with respect to the first main device component. Thus, in other words, the first main device component and the second main device component may be compressed such that they are essentially provided on top of each other, with the first main device component being provided in between the licence plate and the second main device component.

The first main device component and the second main device component are configured for being assembled to engage with each other such that second main device component is further configured for being extendable with respect to the first main device component. Thus, in other words, when the device is mounted on the motorcycle, such as mounted on the back face of the rear license plate, the first main device component may be stationary relative to the licence plate, while the second main device component may be pulled down and extend relative to the first main device component and relative to the license plate.

The device may be configured for being manually operated by a user, such as the driver or the rider of the motorcycle. The user may pull the second main device component down or downwards, relative to the first main device component, to extend the second main device component relative to the first main device component. The user may push the second main device component up or upwards, relative to the first main device component, to retract the second main device component relative to the first main device component.

The device is configured for comprising a passive state when the second main device component is fully retracted with respect the first main device component. The device is configured for comprising a deployed state when the second main device component is fully extended with respect to the first main device component. The first main device component and the second main device component may be configured to be in direct contact with each other in the passive state and in the deployed state. The device may also be in between the passive state and the deployed state, this may typically occur when there is a change from one state to the other. Thus, in other words, then the user pulls down the second main device component, the device may change from the passive state to the deployed state, and may therefore be in between state during the transition. Similarly, when the user push the second main device component upwards, the device may change from the deployed state to the passive state and may therefore be in between state during the transition.

The device is configured for being mountable on the back face of the rear license plate on the motorcycle. Motorcycles usually only have one licence plate and it is usually placed in the rear. Thus, in this disclosure, "licence plate" is used interchangeably with "rear licence plate", and the term "rear" in this regard is simply used for clarifying where on the motorcycle the licence plate is typically provided and thereby where the device may be mounted. The back face of the license plate may the face of the licence plate that does not comprise the licence plate number and letter. While licence plate may vary depending on the country, state, area or region it has been issued in, the inventor of the present invention has found that these variations are not profound.

The device is configured for being at least partly concealable in the passive state when mounted on the back face of the license plate. Preferably, the device may be completely concealed in the passive state, however, this is not a strict requirement as even partly concealable would be an advantage over the prior art.

In some embodiments, the first main device component comprises a first height and a first width. The licence plate may comprise a height and a width. The first height of the first main device component may be configured for being approximately equal to or approximately less than the height of the licence plate. It is also envisioned that the first height of the first main device component may be larger than the height of the licence plate, such as e.g. up to about 20% larger, without compromising the user's aesthetic preference too much. However, in a preferred embodiment, the first heigh of the first main device component is approximately equal to the height of the licence plate. Additionally or alternatively, the first width of the first main device component may be configured for being approximately equal to or less than the width of the licence plate. It is also envisioned that the first width of the first main device component may be larger than the width of the licence plate, such as e.g. up to about 20% larger, without compromising the user's aesthetic preference too much. However, in a preferred embodiment, the first width of the first main device component is approximately less than the height of the licence plate. This is an advantage because it may provide the best possible protection, while also ensuring that the device is concealed by the license plate. The first width of the first main device component may be between about 200-250 mm, such as 205-245 mm, such as 210-240 mm, such as 215-235 mm, such as 220-230 mm, such as 235 mm. The first height of the first main device component may be between about 140-220 mm, such as 145-215 mm, such as 150-210 mm, such as 155-205 mm, such as 160-200 mm, such as 165-195 mm, such as 170-190 mm, such as 175-185 mm, such as 180 mm.

In some embodiments, the first main device component comprises a first thickness. In some embodiments, the second main device component comprises a second thickness. The first thickness may be substantially uniform, such as substantially uniform across the first main device component. Additionally or alternatively, the second thickness may be substantially uniform, such as substantially uniform across the second main device component. The first thickness may be between about 1.00-5.00 mm, such as 2.00 mm, 3.00 mm, 4.00 mm. The second thickness may be between about 1.00-5.00 mm, such as 2.00 mm, 3.00 mm, 4.00 mm. The first and/or second thickness may not take any guide rails, reinforcement elements etc. into account.

In some embodiments, the first main device component comprises a front face and a back face. The front face may be provided opposite the back face. The front face of the first main device component may be configured for facing a front face of the second main device component when the first main device component and the second main device component are assembled. In some embodiments, the first main device comprises a first guide rail. In some embodiments, the first main device comprises a second guide rail. The first guide rail may be provided on the front face of the first main device component. The second guide rail may be provided on the front face of the first main device component.

In some embodiments, the first main device component comprises a first side face and a second side face. The first side face may be provided opposite the second side face. The first guide rail may be provided at or near the first side face, such as on the front face and at or near the first side face. The second guide rail may be provided at or near the second side face, such as on the front face and at or near the second side face.

In some embodiments, the first guide rail comprises a first part that extends substantially orthogonally from the front face of the first main device component. Thus, the first part may extend substantially in a 90 degree angle from the front face. The first part may have a length of between about 2.00-8.00 mm, such as 4.00-6.00 mm. The first guide rail may further comprise a second part that extends substantially orthogonally from the first part of the first guide rail. Thus, the second part may extend substantially in a 90 degree angle from first part. Hereby, the second part may be substantially parallel with the front face of the first main device component. The second part may have a length of between about 5.00-15.00 mm, such as 7.50-12.5 mm, such as 10.00 mm. The length of the first part of the first guide rail may be configured to provide enough free space between the second part of the first guide rail and the front face of the first main device component to accommodate the second thickness of the second main device component while also providing an additional clearance space or tolerance. Such consideration for clearance space or tolerance are well known for the skilled person. For example, in one embodiment, if the second thickness is 2.00 mm, 0.50 mm additional clearance space or tolerance may be favourable. The configuration of the first part and the second part of the first guide rail may be arranged such that the first guide rail may be configured for accommodating a part, such as a corresponding part of the second main device component when the first main device component and the second main device component are assembled.

In some embodiments, the second guide rail comprises a first part that extends substantially orthogonally from the front face of the first main device component. Thus, the first part may extend substantially in a 90 degree angle from the front face. The first part may have a length of between about 2.00-8.00 mm, such as 4.00-6.00 mm. The second guide rail may further comprise a second part that extends substantially orthogonally from the first part of the second guide rail. Thus, the second part may extend substantially in a 90 degree angle from first part. Hereby, the second part may be substantially parallel with the front face of the first main device component. The second part may have a length of between about 5.00-15.00 mm, such as 7.50-12.5 mm, such as 10.00 mm. The length of the first part of the second guide rail may be configured to provide enough free space between the second part of the second guide rail and the front face of the first main device component to accommodate the second thickness of the second main device component while also providing an additional clearance space or tolerance. Such consideration for clearance space or tolerance are well known for the skilled person. For example, in one embodiment, if the second thickness is 2.00 mm, 0.50 mm additional clearance space or tolerance may be favourable. The configuration of the first part and the second part of the second guide rail may be arranged such that the second guide rail may be configured for accommodating a part, such as a corresponding part of the second main device component when the first main device component and the second main device component are assembled.

In some embodiments, if the first and/or second guide rail is provided at the first and/or second side faces, respectively, the first width of the first main device component may be substantially equal to the first width of the second main device component without compromising the first and/or second guide rails' configurability for accommodating a part, such as a corresponding part of the second main device component. However, in some embodiments, if the first and/or second guide rail is provided near the first and/or second side faces, respectively, the first width of the second main device component may be approximately less than the first width of the first main device component in order not to compromise the first and/or second guide rails' configurability for accommodating a part, such as a corresponding part of the second main device component.

For clarity, it should be emphasized that in some embodiments, if the first and/or second guide rail is provided at the first and/or second side face, respectively, the first part of the guide rails may be seen as an extension of the side faces.

In some embodiments, the first main device component comprises a top face and a base face, the top face is provided opposite the base face.

In some embodiments, the first guide rail comprises a base stopping element. The base stopping element of the first guide rail may be provided at or near the base face of the first main device component. Additionally or alternatively, the first guide rail may comprise a top stopping element. The top stopping element of the first guide rail may be provided at or near the top face of the first main device component. In some embodiments, the second guide rail comprises a base stopping element. The base stopping element of the second guide rail may be provided at or near the base face of the first main device component. Additionally or alternatively, the second guide rail may comprises a top stopping element. The top stopping element of the second guide rail may be provided at or near the top face of the first main device component.

Once the device is assembled, the top stopping elements and/or the base stopping elements may provide that the second main device component is "locked" to the first main device component. This is an advantage because it prevents the second main device component from falling out. However, the user may be able to disassemble the device manually by separating the first and second main device component. If the device is not already assembled prior to mounting the device onto the motorcycle, the user may manually assemble the device. The first main device component and the second main device component are configured for being assembled into the device, even if sold separately.

In some embodiments, the second main device component comprises a first width. The first width may be substantially equal to or less than the first width of the first main device component. In some embodiments, the second main device component comprises a second width. The second width may be less than the first width of the second main device component. For example the second width of the second main device component may be 2.00-10.0 mm, such as 4.00-8.00 mm, such as 6.00 mm less than the first width of the second main device component. The first width of the second main device component may be between about 200-250 mm, such as 205-245 mm, such as 210-240 mm, such as 215-235 mm, such as 220-230 mm, such as 235 mm. The second width of the second main device component may be between about 200-250 mm, such as 205-245 mm, such as 210-240 mm, such as 215-235 mm, such as 220-230 mm, such as 235 mm.

In some embodiments, the second main device component comprises a first side face, a second side face, a top face, and a base face. The top face may be provided opposite the base face. The first side face may be provided opposite the second side face. The first side face may comprise a first transition between the first width and the second width. The second side face may comprise a second transition between the first width and the second width. The first transition may be configured for engaging with the base stopping element of the first guide rail, such as the first guide rail comprised in the first main device component. Thus, the first transition may be configured for engaging with the base stopping element of the first guide rail when the device is in the deployed state. Additionally or alternatively, the second transition may be configured for engaging with the base stopping element of the second guide rail, such as the second guide rail comprised in the first main device component. Thus, the second transition may be configured for engaging with the base stopping element of the second guide rail when the device is in the deployed state.

In some embodiments, the second main device component comprises a first boundary region between the first side face and the top face. In some embodiments, the second main device component comprises a second boundary region between the second side face and the top face. The first boundary region may comprise a first indent. In other words, the first indent may be provided at the first side face at or near the top face. Additionally or alternatively, the second boundary region may comprise a second indent. In other words, the second indent may be provided at the second side face at or near the top face. The first indent may be configured for engaging with the top stopping element of the first guide rail, such as the first guide rail comprised in the first main component. Thus, the first indent may be configured for engaging with the top stopping element of the first guide rail when the device is in the passive state. The second indent may be configured for engaging with the top stopping element of the second guide rail, such as the second guide rail comprised in the first main component. Thus, the second indent may be configured for engaging with the top stopping element of the second guide rail when the device is in the passive state. The first and/or second indent and the top stopping elements may be configured for providing that the device is maintained in the passive state due to friction until the user changes the device into the deployed state.

In some embodiments, the first boundary region comprises a first notch. In some embodiments, the second boundary region comprises a second notch. The first notch may be configured for providing further guidance for when the first main device component and the second main device component are engaging with each other. The second notch may be configured for providing further guidance for when the first main device component and the second main device component are engaging with each other. More specifically, the first notch and/or the second notch may be configured for providing guidance when the second main device component is configured for being retractable with respect to the first main device component. The first and/or second notch may comprise a slant shape. The guidance may occur prior to the first indent and/or second indent engaging with the top stopping elements, thereby guiding the device into the passive state in which the second main device component is fully retracted with respect to the first main device component. This is an advantage because it may provide that it is easier for the user to get the device into the passive state.

In some embodiments, the second main device component comprises a first height and a second height, the second height is less that the first height of the second main device component. The second height may be configured for providing that the device is configured for being mountable on the back face of the license plate using fastening means without compromising the second main device component's configurability to be fully retracted with respect the first main device component. In this context, fastening means may for example comprise any kind of and any combination of bolts, screws, rivets, nut, bolts and washers. This is an advantage because it may provide that the device may be mounted on the licence plate in a safe and reliable manner. Furthermore, it is an advantage that the fastening means used for mounting the device onto the licence plate may be a same fastening means as used for mounting the licence plate onto the motorcycle. The first height of the second main device component may be between about 140-220 mm, such as 145-215 mm, such as 150-210 mm, such as 155-205 mm, such as 160-200 mm, such as 165-195 mm, such as 170-190 mm, such as 175-185 mm, such as 180 mm. The first height of the second main device component may be substantially equal to the first height of the first main device component. Alternatively, the first height of the second main device component may be different to the first height of the first main device component. The second height of the second main device component may be between about 140-220 mm, such as 145-215 mm, such as 150-210 mm, such as 155-205 mm, such as 160-200 mm, such as 165-195 mm, such as 170-190 mm, such as 175-185 mm, such as 180 mm.

In some embodiments, the second main device component comprises a front face and a back face, the front face is provided opposite the back face. The front face of the second main device component may be configured for facing the front face of the first main device component when the first main device component and the second main device component are assembled. In some embodiments, the second main device component comprises one or more reinforcement elements provided on the back face of the second main device component. This is an advantage because the one or more reinforcement element may further increase the reinforcement effect that the device may have on the licence plate. In some embodiments, the second main device component comprises a handle element. The handle element provided on the back face of the second main device component. The handle element may be a protrusion or a depression, such as a depression in the material of the second main device component. Alternatively, the handle element may be provided at or on the base face, and the handle element may be a protrusion, such as a loop or a ball or a strap. If the handle element is a protrusion, a material of the handle element may be a same or a different material than the second main device component. The one or more reinforcement elements may be a same or a different material than the second main device component. The one or more reinforcement elements may comprise various shapes and may be protrusions or extending from the back face of the second main device component. The second main device component may be configured such that the one or more reinforcement elements may not compromise the first main device component's and the second main device component's configurability to engage with each other, i.e. the one or more reinforcement elements may be configured for not obstructing the second part of the guide rails. The one or more reinforcement elements may extend between about 1.00-5.00 mm from the back face. The handle element may extend between 1.00-10.0 mm from the back face.

In some embodiments, the first main device component comprises one or more depressions on the back face. The one or more depressions may be configured for accommodating fastening means for facilitating mounting on the back face of the license plate. In this context, fastening means may comprise any kind of adhesive material, any kind of magnetic material, and hook-and-loop fasteners. Fastening means may also comprise a combination of the above, such as hook and loop fasteners that are adhered to the back face of the first main device component and the licence plate, respectively, using e.g. glue or tape.

Also disclosed is a first main device component according to the disclosure. The first main device component is suitable for co-operation with a second main device component. Also disclosed is a second main device component according to the disclosure. The second main device component is suitable for co-operation a first main device component.

The present invention relates to different aspects including the device, the first main device component and the second main device component. The first main device component and the second main device component are interrelated products and, when in co-operation, provides one or more of the benefits and advantages described in connection with the device, and comprises one or more embodiments corresponding to the embodiments described in connection with the device and/or disclosed in the appended claims or items.

### BRIEF DESCRIPTION OF THE DRAWINGS

The above and other features and advantages will become readily apparent to those skilled in the art by the following exemplary embodiments thereof with reference to the attached drawings, in which:

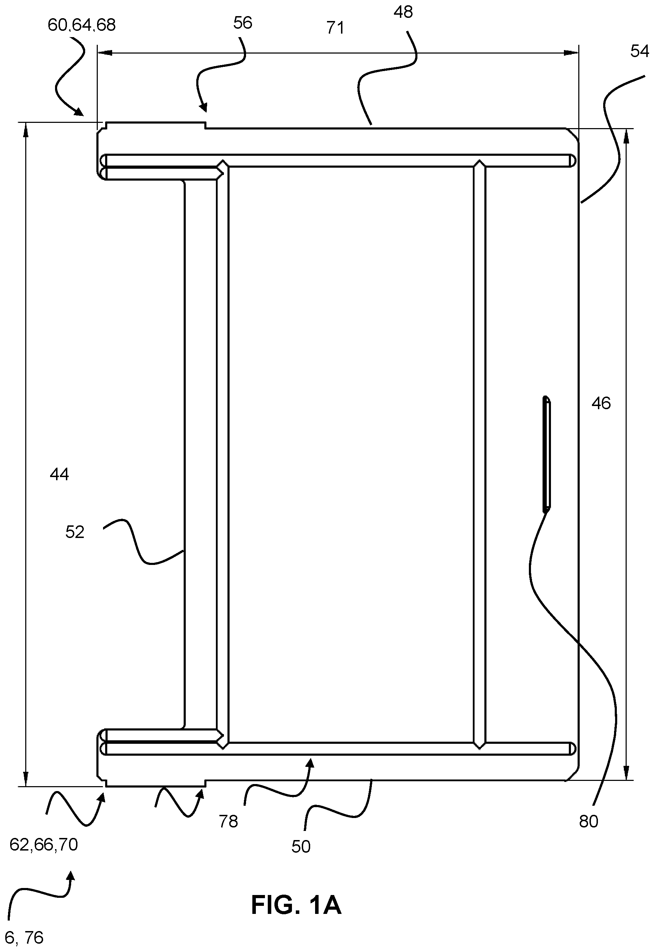

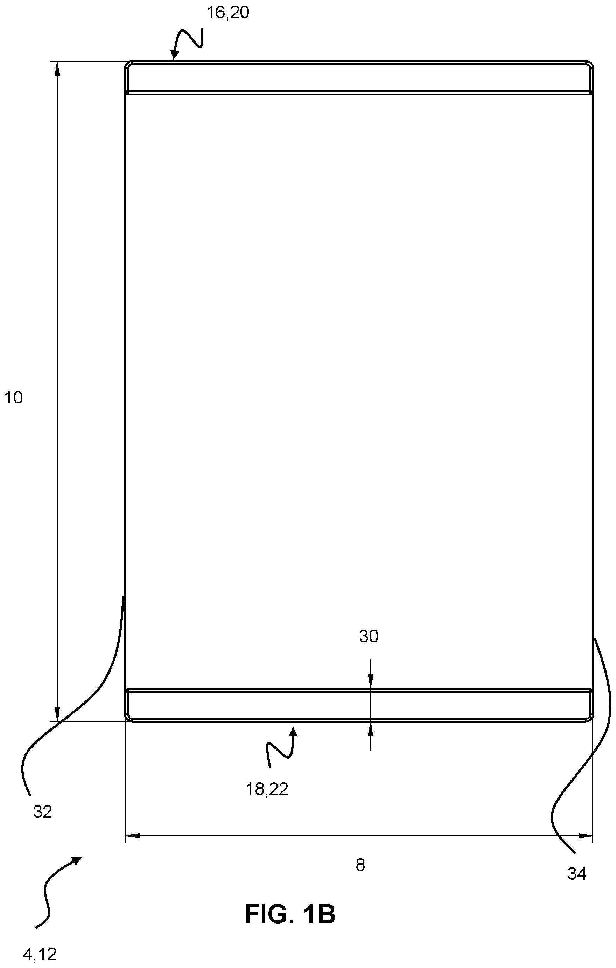

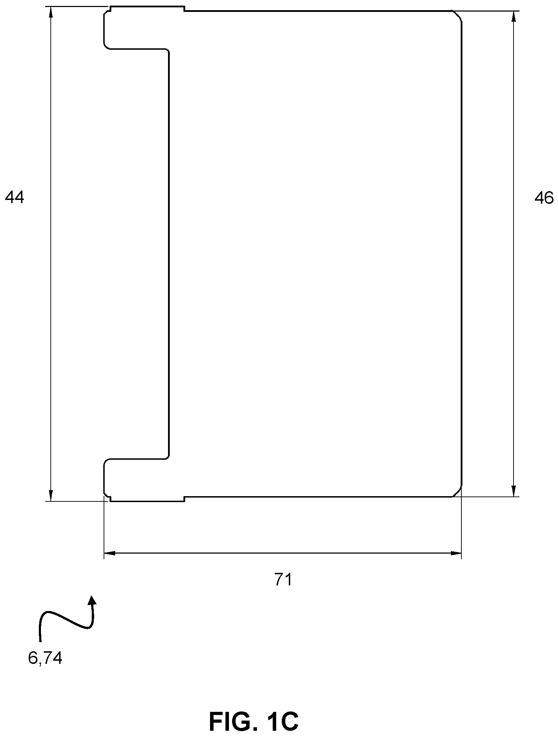

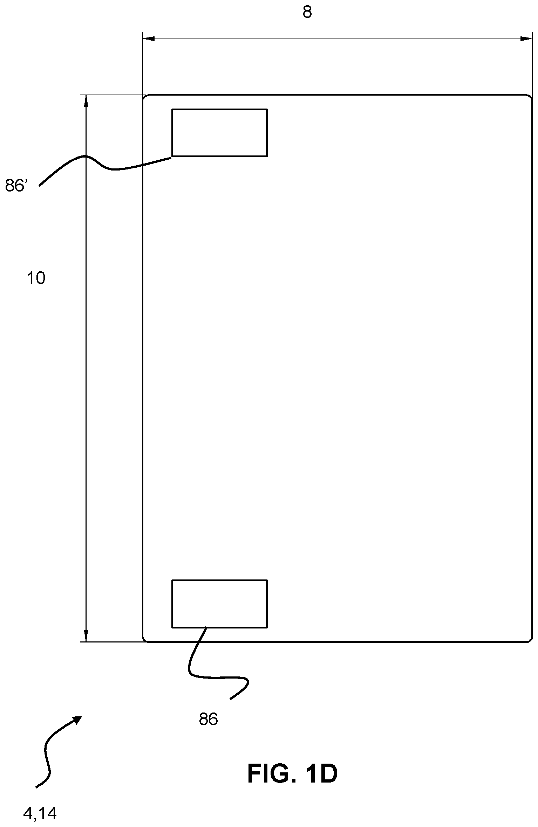

Fig. 1A-1D illustrates an exemplary device.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention nor as a limitation on the scope of the claimed invention. In addition, an illustrated embodiment needs not have all aspects or advantages shown. An aspect or an advantage described in conjunction with a particular embodiment is not necessarily limited to that embodiment and can be practiced in any other embodiment even if not so illustrated, or if not so explicitly described. Throughout, the same reference numerals are used for identical or corresponding parts.

Fig. 1A-1D illustrates an exemplary device. The device for providing protective covering in wet conditions when mounted on a motorcycle. The device comprises a first main device component 4 and a second main device component 6. The first main device component 4 and the second main device component 6 are configured for being assembled to engage with each other. The first main device component 4 and the second main device component 6 are configured for being assembled to engage with each other such the second main device component 6 is configured for being retractable with respect to the first main device component 4. The first main device component 4 and the second main device component 6 are configured for being assembled to engage with each other such that second main device component 6 is further configured for being extendable with respect to the first main device component 4. The device is configured for comprising a passive state when the second main device component 6 is fully retracted with respect the first main device component 4. The device is configured for comprising a deployed state when the second main device component 6 is fully extended with respect to the first main device component 4. The device is configured for being mountable on a back face of a rear license plate on the motorcycle. The device is configured for being at least partly concealable in the passive state when mounted on the back face of the license plate.

The first main device component 4 is shown to comprise a first height 8 and a first width 10. The first height 8 of the first main device component 4 and/or the first width 10 of the first main device component 4 may be equal to or less than a height and/or a width of the licence plate, respectively.

The first main device component 4 is shown to comprise a front face 12 and a back face 14, the front face 12 is provided opposite the back face 14. The first main device component 4 is shown to comprise a first guide rail 16 and a second guide rail 18, the first guide rail 16 is provided on the front face 12 of the first main device component 4, and the second guide rail 18 is provided on the front face 12 of the first main device component 4.

The first main device component 4 is shown to comprise a first side face 20 and a second side face 22, the first side face 20 is provided opposite the second side face 22. The first guide rail 16 is shown to be provided at or near the first side face 20, and the second guide rail 18 is provided at or near the second side face 22.

The first guide rail 16 is shown to comprise a first part that extends substantially orthogonally from the front face 12 of the first main device component 4. The first guide rail 16 is shown to further comprise a second part that extends substantially orthogonally from the first part 22 of the first guide rail 16, such that the first guide rail 16 is configured for accommodating a corresponding part of the second main device component 6 when the first main device component 4 and the second main device component 6 are assembled.

The second guide rail 18 comprises a first part that extends substantially orthogonally from the front face 12 of the first main device component 4. The second guide rail 18 is shown to further comprise a second part that extends substantially orthogonally from the first part of the second guide rail 18, such that the second guide rail 18 is configured for accommodating a corresponding part of the second main device component 6 when the first main device component 4 and the second main device component are assembled 6.

The first main device component 4 is shown to comprise a top face 32 and a base face 34, the top face 32 is provided opposite the base face 34. In this embodiment, the first guide rail 16 comprises a base stopping element (not shown), the first guide rail 16 comprises a top stopping element (not shown), the second guide rail 18 comprises a base stopping element (not shown), and the second guide rail 18 comprises a top stopping element (not shown).

The second main device component 6 is shown to comprise a first width 44 that is less than the first width 10 of the first main device component 4. The second main device component 6 is shown to comprise a second width 46 that is less than the first width 44 of the second main device component 6.

The second main device component 6 is shown to comprise a first side face 48, a second side face 50, a top face 52, and a base face 54, the top face 52 is provided opposite the base face 54, and the first side face 48 is provided opposite the second side face 50. The first side face 48 is shown to comprise a first transition 56 between the first width 44 and the second width 46. The second side face 50 is shown to comprise a second transition 58 between the first width 44 and the second width 46. The first transition 56 and the second transition 58 is shown to be configured for engaging with the base stopping elements (not shown) of the first guide rail 16 and second guide rail 18, such as when the device is in the deployed state.

The second main device component 6 is shown to comprise a first boundary region 60 between the first side face and the top face, and the second main device component comprises a second boundary region 62 between the second side face and the top face. The first boundary region 60 is shown to comprise a first indent 64 and the second boundary region 62 is shown to comprise a second indent 66. The first indent 64 and second ident 66 is shown to be configured for engaging with the top stopping elements (not shown) of the first guide rail 16 and second guide rail 18, such as when the device is in the passive state.

The first boundary region 60 is shown to comprise a first notch 68, and the second boundary region 62 is shown to comprise a second notch 70, the first notch 68 and the second notch 70 is shown to be configured for providing further guidance for when the first main device component 4 and the second main device component 6 are engaging with each other.

The second main device component 6 is shown to comprise a first height 71 and a second height, the second height is less that the first height 71 of the second main device component 6. The second height is configured for providing that the device is configured for being mountable on the back face of the license plate using fastening means without compromising the second main device component's 6 configurability to be fully retracted with respect the first main device component 4.

The second main device component 6 is shown to comprise a front face 74 and a back face 76, the front face 74 is provided opposite the back face 76. The second main device component 6 is shown to comprise one or more reinforcement elements 78 provided on the back face 76 of the second main device component 6. The second main device component 6 is shown to comprise a handle element 80 provided on the back face 76 of the second main device component 6. In the figure, the handle element 80 is shown as a protrusion.

The first main device component 4 is shown to comprise one or more depressions 86,86' on the back face, the one or more depressions 86,86' are shown to be configured for accommodating fastening means for facilitating mounting on the back face of the license plate.

The first main device component 4 may comprise a first thickness (not shown). The second main device component 6 may comprise a second thickness (not shown).

The first main device component 4 is suitable for co-operation with the second main device component 6. Similarly, the second main device component 6 is suitable for co-operation a first main device component 4.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive manner. The claimed invention is intended to cover all alternatives, modifications and equivalents.

### LIST OF REFERENCES

4 first main device component
6 second main device component
8 first height of the first main device component
10 first width of the first main device component
12 front face of the first main device component
14 back face of the first main device component
16 first guide rail
18 second guide rail
20 first side face of the first main device component
22 second side face of the first main device component
32 top face of the first main device component
34 base face of the first main device component
44 first width of the second main device component
46 second width of the second main device component
48 first side face of the second main device component
50 second side face of the second main device component
52 top face of the second main device component
54 base face of the second main device component
56 first transition
58 second transition
60 first boundary region
62 second boundary region
64 first indent
66 second indent
68 first notch
70 second notch
71 first height of the second main device component
74 front face of the second main device component
76 back face of the second main device component
78 reinforcement elements
80 handle element
86 depressions

### LIST OF ITEMS

1. A device for providing protective covering in wet conditions when mounted on a motorcycle, the device comprising a first main device component and a second main device component, wherein:
   - the first main device component and the second main device component are configured for being assembled to engage with each other such the second main device component is configured for being retractable with respect to the first main device component, and such that second main device component is further configured for being extendable with respect to the first main device component;
   - the device is configured for comprising a passive state when the second main device component is fully retracted with respect the first main device component;
   - the device is configured for comprising a deployed state when the second main device component is fully extended with respect to the first main device component; and
   wherein the device is configured for being mountable on a back face of a rear license plate on the motorcycle, and wherein the device is configured for being at least partly concealable in the passive state when mounted on the back face of the license plate.
2. The device according to item 1, wherein the first main device component comprises a first height and a first width, and wherein the first height of the first main device component and/or the first width of the first main device component is equal to or less than a height and/or a width of the licence plate, respectively.
3. The device according to any one of the preceding items, wherein the first main device component comprises:
   - a front face and a back face, the front face is provided opposite the back face; and
   - a first guide rail and a second guide rail, wherein the first guide rail is provided on the front face, and wherein the second guide rail is provided on the front face.
4. The device according to any one of the preceding items, wherein the first main device component comprises a first side face and a second side face, the first side face is provided opposite the second side face; and wherein the first guide rail is provided at or near the first side face, and wherein the second guide rail is provided at or near the second side face.
5. The device according to any one the preceding items, wherein the first guide rail comprises a first part that extends substantially orthogonally from the front face of the first main device component, wherein the first guide rail further comprises a second part that extends substantially orthogonally from the first part of the first guide rail, such that the first guide rail is configured for accommodating a corresponding part of the second main device component when the first main device component and the second main device component are assembled, and
   wherein the second guide rail comprises a first part that extends substantially orthogonally from the front face of the first main device component, wherein the second guide rail further comprises a second part that extends substantially orthogonally from the first part of the second guide rail, such that the second guide rail is configured for accommodating a corresponding part of the second main device component when the first main device component and the second main device component are assembled.
6. The device according to any one of the preceding items, wherein first main device component comprises a top face and a base face, the top face is provided opposite the base face, wherein the first guide rail comprises a base stopping element, and/or the first guide rail comprises a top stopping element, and wherein the second guide rail comprises a base stopping element, and/or the second guide rail comprises a top stopping element.
7. The device according to any one of the preceding items, wherein the second main device component comprises a first width that is less than the first width of the first main device component; and wherein the second main device component comprises a second width that is less than the first width of the second main device component.
8. The device according to any one of the preceding items, wherein the second main device component comprises a first side face, a second side face, a top face, and a base face, the top face is provided opposite the base face, and the first side face is provided opposite the second side face;
   wherein the first side face comprises a first transition between the first width and the second width, and wherein the second side face comprises a second transition between the first width and the second width, and wherein the first transition and/or the second transition is configured for engaging with the base stopping element(s) of the first guide rail and/or second guide rail; and/or wherein the second main device component comprises a first boundary region between the first side face and the top face, and the second main device component comprises a second boundary region between the second side face and the top face, wherein the first boundary region comprises a first indent and/or the second boundary region comprises a second indent, wherein the first indent and/or second ident is configured for engaging with the top stopping element(s) of the first guide rail and/or second guide, respectively.
9. The device according to any one of the preceding items, wherein the first boundary region comprises a first notch, and/or the second boundary region comprises a second notch, wherein the first notch and/or the second notch is configured for providing further guidance for when the first main device component and the second main device component are engaging with each other.
10. The device according to any one of the preceding items, wherein the second main device component comprises a first height and a second height, the second height is less that the first height of the second main device component, and wherein the second height is configured for providing that the device is configured for being mountable on the back face of the license plate using fastening means without compromising the second main device component's configurability to be fully retracted with respect the first main device component.
11. The device according to any one of the preceding items, wherein the second main device component comprises a first height and a second height, the second height is less that the first height of the second main device component, and wherein the second height is configured for providing that the device is configured for being mountable on the back face of the license plate using screws or bolts without compromising the second main device component's configurability to be fully retracted with respect the first main device component.
12. The device according to any one of the preceding items, wherein the second main device component comprises:
   - a front face and a back face, the front face is provided opposite the back face; and
   - one or more reinforcement elements provided on the back face of the second main device component; and/or
   - a handle element provided on the back face of the second main device component.
13. The device according to any one of the preceding items, wherein the first main device component comprises one or more depressions on the back face, wherein the one or more depressions are configured for accommodating fastening means for facilitating mounting on the back face of the license plate.
14. The device according to any one of the preceding items, wherein the first main device component comprises one or more depressions on the back face, wherein the one or more depressions are configured for accommodating adhesive tape for facilitating mounting on the back face of the license plate.
15. The device according to any one of the preceding items, wherein the first main device component comprises a first thickness; wherein the second main device component comprises a second thickness; and wherein the first thickness and/or second thickness is substantially uniform.
16. A first main device component according to any one of the preceding items.
17. A second main device component according to any one of the preceding items.

## Claims

1. A device for providing protective covering in wet conditions when mounted on a motorcycle, the device comprising a first main device component and a second main device component, wherein:
- the first main device component and the second main device component are configured for being assembled to engage with each other such the second main device component is configured for being retractable with respect to the first main device component, and such that second main device component is further configured for being extendable with respect to the first main device component;
- the device is configured for comprising a passive state when the second main device component is fully retracted with respect the first main device component;
- the device is configured for comprising a deployed state when the second main device component is fully extended with respect to the first main device component; and
wherein the device is configured for being mountable on a back face of a rear license plate on the motorcycle, and wherein the device is configured for being at least partly concealable in the passive state when mounted on the back face of the license plate.

2. The device according to claim 1, wherein the first main device component comprises a first height and a first width, and wherein the first height of the first main device component and/or the first width of the first main device component is equal to or less than a height and/or a width of the licence plate, respectively.

3. The device according to any one of the preceding claims, wherein the first main device component comprises:
- a front face and a back face, the front face is provided opposite the back face; and
- a first guide rail and a second guide rail, wherein the first guide rail is provided on the front face, and wherein the second guide rail is provided on the front face.

4. The device according to any one of the preceding claims, wherein the first main device component comprises a first side face and a second side face, the first side face is provided opposite the second side face; and wherein the first guide rail is provided at or near the first side face, and wherein the second guide rail is provided at or near the second side face.

5. The device according to any one the preceding claims, wherein the first guide rail comprises a first part that extends substantially orthogonally from the front face of the first main device component, wherein the first guide rail further comprises a second part that extends substantially orthogonally from the first part of the first guide rail, such that the first guide rail is configured for accommodating a corresponding part of the second main device component when the first main device component and the second main device component are assembled, and
wherein the second guide rail comprises a first part that extends substantially orthogonally from the front face of the first main device component, wherein the second guide rail further comprises a second part that extends substantially orthogonally from the first part of the second guide rail, such that the second guide rail is configured for accommodating a corresponding part of the second main device component when the first main device component and the second main device component are assembled.

6. The device according to any one of the preceding claims, wherein first main device component comprises a top face and a base face, the top face is provided opposite the base face, wherein the first guide rail comprises a base stopping element, and/or the first guide rail comprises a top stopping element, and wherein the second guide rail comprises a base stopping element, and/or the second guide rail comprises a top stopping element.

7. The device according to any one of the preceding claims, wherein the second main device component comprises a first width that is less than the first width of the first main device component; and wherein the second main device component comprises a second width that is less than the first width of the second main device component.

8. The device according to any one of the preceding claims, wherein the second main device component comprises a first side face, a second side face, a top face, and a base face, the top face is provided opposite the base face, and the first side face is provided opposite the second side face;
wherein the first side face comprises a first transition between the first width and the second width, and wherein the second side face comprises a second transition between the first width and the second width, and wherein the first transition and/or the second transition is configured for engaging with the base stopping element(s) of the first guide rail and/or second guide rail, respectively; and/or
wherein the second main device component comprises a first boundary region between the first side face and the top face, and the second main device component comprises a second boundary region between the second side face and the top face, wherein the first boundary region comprises a first indent and/or the second boundary region comprises a second indent, wherein the first indent and/or second ident is configured for engaging with the top stopping element(s) of the first guide rail and/or second guide rail, respectively.

9. The device according to any one of the preceding claims, wherein the first boundary region comprises a first notch, and/or the second boundary region comprises a second notch, wherein the first notch and/or the second notch is configured for providing further guidance for when the first main device component and the second main device component are engaging with each other.

10. The device according to any one of the preceding claims, wherein the second main device component comprises a first height and a second height, the second height is less that the first height of the second main device component, and wherein the second height is configured for providing that the device is configured for being mountable on the back face of the license plate using fastening means without compromising the second main device component's configurability to be fully retracted with respect the first main device component.

11. The device according to any one of the preceding claims, wherein the second main device component comprises:
- a front face and a back face, the front face is provided opposite the back face; and
- one or more reinforcement elements provided on the back face of the second main device component; and/or
- a handle element provided on the back face of the second main device component.

12. The device according to any one of the preceding claims, wherein the first main device component comprises one or more depressions on the back face, wherein the one or more depressions are configured for accommodating fastening means for facilitating mounting on the back face of the license plate.

13. The device according to any one of the preceding claims, wherein the first main device component comprises a first thickness; wherein the second main device component comprises a second thickness; and wherein the first thickness and/or second thickness is substantially uniform.

14. A first main device component according to any one of the preceding claims.

15. A second main device component according to any one of the preceding claims.
